# EUROPÄISCHE PATENTANMELDUNG

(11) **EP 0 821 994 A2**
(43) Veröffentlichungstag der Anmeldung: **04.02.1998**
(21) Anmeldenummer: 97111012.7
(22) Anmeldetag: 02.07.1997
(51) Int. Cl.: B01D 53/32, B01D 53/00

(54) **Vorrichtung zum Reinigen von über Flüssigkeiten in Behältern entstehenden Gasen oder Gasgemischen**

(30) Priorität: 02.08.1996 DE 19631307
(71) Anmelder: Herm. J. Hellmers GmbH, 22113 Hamburg (DE)
(72) Erfinder: Schramek, Otto, 88441 Mittelbiberach (DE)
(74) Vertreter: Niedmers, Ole, Dipl.-Phys.

(57) **Zusammenfassung**

Es wird eine Vorrichtung (10) zum Reinigen von über Flüssigkeiten (12) in Behältern entstehenden Gasen oder Gasgemischen (13), insbesondere in Behältern (11) von Kommunalfahrzeugen zur Aufnahme von Flüssigkeiten wie Abwassergemischen aus Kanalisationen, Kläranlagen oder Sammelanlagen, vorgeschlagen, umfassend wenigstens eine Pumpeneinrichtung (14) zur Förderung des Gases oder Gasgemisches (13) aus dem Behälter (11). Das den Behälter (11) verlassende Gas oder Gasgemisch (13) ist vor dem Austritt (15) in die Umgebung (16) mittels einer Ionisierungseinrichtung (17) behandelbar.

## Beschreibung

Die Erfindung betrifft eine Vorrichtung zum Reinigen von über Flüssigkeiten in Behältern entstehenden Gasen oder Gasgemischen, insbesondere in Behältern von Kommunalfahrzeugen zur Aufnahme von Flüssigkeiten Wie Abwassergemischen aus Kanalisationen, Kläranlagen oder Sammelanlagen, umfassend wenigstens eine Pumpeneinrichtung zur Förderung des Gases oder Gasgemisches aus dem Behälter.

Abwassergemische aus Kanalisationen, Kläranlagen oder Sammelanlagen für Abwässer werden vielfach zur anderweitigen Entsorgung in Behälter gepumpt, die auf sogenannten Kommunalfahrzeugen aufgebaut sind, wobei derartige Kommunalfahrzeuge nicht nur unmittelbar zur Aufnahme der Flüssigkeiten dienen, sondern auch gleichzeitig zur Reinigung entsprechend verschmutzter Orte eingesetzt werden, wobei das bei der Reinigung anfallende Flüssigkeitsgemisch im wesentlichen aus der Reinigungsflüssigkeit und der in den Behälter gepumpten zu entsorgenden Hauptflüssigkeit besteht udn im Behälter zusammengeführt wird.

Behälter dieser Art, die grundsätzlich auch für diese Zwecke herangezogene stationäre Behälter sein können, nehmen diese Flüssigkeiten normalerweise in zwei von einander separierten Teilbehältern auf, wobei der eine Behälterteil die stark verschmutzte Flüssigkeit aufnimmt, während der andere Behälterteil die weniger stark verschmutzte Flüssigkeit aufnimmt. Auf geeignete Weise kann der Behälterteil mit der stark verschmutzten Flüssigkeit von der gering verschmutzten Flüssigkeit separiert werden, die vielfach als Reinigungsflüssigkeit unmittelbar vor Ort der durchzuführenden Reinigung verwendet werden kann.

Über beiden Behälterteilen entstehen aufgrund der Zusammensetzung der jeweiligen Flüssigkeiten, d.h. über der stark verschmutzten Flüssigkeit stärker, über der weniger verschmutzten Flüssigkeit weniger, Gase und/oder Gasgemische, die bisher in den meisten Fällen in dem Augenblick unkontrolliert an die Umgebung abgegeben werden, wo die Flüssigkeiten bestimmungsgemäß in den Behälter hineingepumpt werden, wobei das Hineinpumpen der Flüssigkeiten in den Behälter in den meisten Fällen mittels einer Pumpeneinrichtung in Form einer Vakuumpumpe erfolgt.

Die somit an die Umgebung im Zuge des Pumpvorganges abgegebenen Gase und/oder Gasgemische stellen in vielen Fällen nicht nur für den Bediener derartiger Kommunalfahrzeuge oder derartiger Behälteranlagen eine erhebliche Geruchsbelästigung dar, sondern sie können auch eine erhebliche Geruchsbelästigung für die unmittelbare Umgebung darstellen, was nicht akzeptabel ist. Ein noch wichtigerer nachteiliger Aspekt ist der, daß, je nach Zusammensetzung der im Behälter aufgenommenen Flüssigkeit, auch aus der Flüssigkeit Gase und/oder Gasgemische freigesetzt werden können, die unmittelbar schädlich für den Organismus des Menschen und/oder umweltschädlich sind, so daß diese Gas nicht ungereinigt und unkontrolliert an die Umgebung abgegeben werden sollen bzw. dürfen.

Um dieses gravierende Problem zu beheben, sind bisher unterschiedliche Methoden angewendet worden, um die Gase und/oder Gasgemische zu neutralisieren und/oder direkt zu reinigen. Dazu hat man bisher chemische Neutralisationsmittel der Flüssigkeit zugesetzt, wodurch die Entstehung von Gas und/oder Gasgemischen weitgehend verhindert werden sollte, oder man hat das entstandene Gas und/oder Gasgemisch, bevor es an die Umgebung abgegeben wurde, über Aktivkohlefilter geleitet. Diese Verfahren und die dazu benutzten Einrichtungen haben aber alle den Nachteil, daß deren mögliche Einsatzzeit direkt von der Menge des zur Verfügung stehenden Filtermaterials, entweder in Form einer im vorangehend beschriebenen Sinne zugeführten chemischen Ingredienz oder aber in Form von Aktivkohlefiltern abhängig ist, wobei auch diese bekannten Verfahren und Einrichtungen den Nachteil haben, daß die zugesetzte chemische Ingredienz speziell abgestimmt sein muß auf die geruchserzeugenden Bestandteile in der Flüssigkeit, was im weitesten Sinne gleichermaßen auch für den Aktivkohlefilter gilt, der grundsätzlich auch nicht in der Lage ist, breitbandig den Bereich aller möglichen Gase oder Gasgemische erzeugenden Medien zu filtern. Aktivkohlefilter haben zudem noch den Nachteil, daß diese sehr feuchtigkeitsempfindlich sind, d.h. sie verlieren ihre Filterfähigkeit dann, wenn beispielsweise Wasserbestandteile im Gas und/oder Gasgemisch im Aktivkohlefilter kondensieren.

Schließlich ist es von Nachteil, daß die chemische Neutralisationsingredienz vielfach im Zuge der Gesamtentsorgung der Flüssigkeit durch aufwendige Verfahren aus der Flüssigkeit wieder entfernt werden muß, was vielfach gar nicht durchführbar ist, wohingegen bei Einsatz von Aktivkohlefiltern das eigentliche Filtermaterial nach Gebrauch gesammelt und fachgerecht entsorgt werden muß, was wiederum vielfach nicht durchführbar ist und wiederum neue Schwierigkeiten in bezug auf die notwendige Entsorgung und/oder Deponierung verursacht. Schließlich benötigen derartige Filteranlagen auf Kommunalfahrzeugen derart viel Platz, daß diese darauf ohne kostspielige Vergrößerungen des Fahrzeugs gar nicht angebaut bzw. untergebracht werden können.

Es ist deshalb Aufgabe der vorliegenden Erfindung, eine Vorrichtung der eingangs genannten Art zu schaffen, die ohne die Notwendigkeit der Zugabe chemischer Ingredienzen zur Flüssigkeit und ohne schwer oder gar nicht zu entsorgende Filtermittel die über den Flüssigkeiten in den Behältern stehenden Gase oder Gasgemische effektiv reinigen kann, wobei derartige Vorrichtungen bei hoher Reinigungseffektivität einen geringen An- und Einbauraum beispielsweise an Kommunalfahrzeugen benötigen, und wobei die Vorrichtung wartungsarm sein soll und bei der Reinigung anfallende umwelt- und gesundheitsschädliche Nebenprodukte nicht anfallen.

Gelöst wird die Aufgabe gemäß der Erfindung dadurch, daß das den Behälter verlanssende Gas oder Gasgemisch vor dem Austritt in die Umgebung mittels einer Ionisierungseinrichtung behandelbar ist.

Der Vorteil der erfindungsgemäßen Lösung besteht im wesentlichen darin, daß durch Einwirkung der Ionisierungseinrichtung auf den Luftbestandteil des Gasgemisches zunächst der als O₂ gebunden vorhandene Sauerstoff in zwei O-Atome zerfällt, wobei an sich bekannt ist, daß atomarer Sauerstoff ein sehr reaktionsintensives Oxidationsmittel ist, mit dem beispielsweise auch Viren, Bakterien oder Schimmelsporen abgetötet werden können und ebenfalls organische Verbindungen, die für den Geruch des Gases und/oder des Gasgemisches verantwortlich sind, aufgespalten bzw. neutralisiert werden. Bei der erfindungsgemäß vorgeschlagenen Lösung entstehen regelmäßig keine schwer zu entsorgenden Nebenprodukte, wobei eine Vorrichtung dieser Art an sich kontinuierlich zur Reinigung von Abluft betrieben werden kann, solange die für den Betrieb der Ionisierungseinrichtung benötigte Energie zur Verfügung steht. Eine derartige Ionisierungseinrichtung kann an sich in den normalen Abluftkreislauf einer Ansaug- bzw. Abluftausstoßeinrichtung eingebaut werden, wie sie normalerweise bei derartigen Behältern, ob nun stationär oder direkt auf Kommunalfahrzeugen angebaut, vorhanden ist. Maßnahmen für die Bevorratung von Filtermaterialien oder chemischen Ingredienzen, die der Flüssigkeit zugesetzt werden müssen, sind nicht erforderlich.

Bei einer vorteilhaften Ausgestaltung der Vorrichtung wird die Umgebungsluft über die Ionisierungseinrichtung geleitet, wobei die dabei entstehende, wenigstens teilweise ionisierte Luft dem den Behälter verlassenden Gas oder Gasgemisch zu dessen ionisierender Behandlung beigemischt wird. Die vorbeschriebene gesonderte vorteilhafte Ausgestaltung der Vorrichtung wird vorzugsweise dann angewendet, wenn davon ausgegangen werden muß, daß das über der Flüssigkeit im Behälter stehende Gas und/oder Gasgemisch eine derartige Zusammensetzung hat, daß dieses beispielsweise leicht brennbar ist oder aufgrund jener Zusammensetzung sowie der Luftbestandteile ein explosives Gemisch ist oder aber wenn hohe Wasseranteile im Gas und/oder Gasgemisch vorhanden sind. In diesem Falle ist es nicht zweckmäßig, das im Behälter über der Flüssigkeit stehende Gas und/oder Gasgemisch direkt durch die Ionisierungseinrichtung zu leiten, sondern zunächst normale Umgebungsluft zu ionisieren und diese atomaren Sauerstoff enthaltende Umgebungsluft dem zu reinigenden Gas und/oder Gasgemisch dosiert zuzusetzten.

Um eine gute Durchmischung und somit eine gute Reinigungswirkung durch den in der Umgebungsluft enthaltenen und durch die Ionisierung in einem großen Teil atomar vorliegenden Sauerstoff mit dem zu behandelnden Gas und/oder Gasgemisch zu erreichen, ist es vorteilhaft, die Behandlung des Gases und/oder Gasgemisches längs einer in der Länge vorbestimmbaren Strecke und/oder in einer vorbestimmbaren Zeit erfolgen zu lassen, so daß durch die vorbestimmbare Strecke und die vorbestimmbare Zeit gezielt Einfluß auf die Zusammensetzung des Gases und/oder Gasgemisches genommen werden kann.

Eine gezielte Einflußnahme auf den Reinigungsvorgang auch in Abhängigkeit der Zusammensetzung des Gases und/oder Gasgemisches ist dadurch möglich, daß ebenfalls die Menge der pro Zeit erzeugten ionisierten Luft und/oder deren Druck relativ zum Druck des zu reinigenden Gases und/oder Gasgemisches einstellbar und/oder überwachbar ist. Es ist möglich, eine Analyse der Zusammensetzung des Gases und/oder Gasgemisches vorzunehmen, was durch eine geeignete Analyseeinrichtung, die beispielsweise am Fahrzeug oder am Behälter angeordnet sein kann, vorgenommen werden kann, so daß eine Einstellung und/oder Überwachung im Lichte des Analyseergebnisses automatisch erfolgen kann.

Um schließlich auch noch Restbestandteile an umwelt- und/oder gesundheitsschädlichen und/oder geruchsintensiven Stoffen im zu reinigenden Gas und/oder Gasgemisch zu entfernen, die durch die Behandlung mittels des atomaren Sauerstoffs noch nicht endgültig neutralisiert worden sind, ist es vorteilhaft den Auslaß zum Austritt des behandelten Gases oder Gasgemisches mit einer Filtereinrichtung zu versehen, d.h. das aus dem Auslaß austretende Gas und/oder Gasgemisch zuvor vor der endgültigen Freisetzung in die Umgebung noch einmal einer Nachreinigung zu unterziehen.

In dieser zusätzlichen Filtereinrichtung können Kondensate oder sonstige beim Filtervorgang aus dem austretenden Gas und/oder Gasgemisch herausgetrennte filtrate entstehen, die vorzugsweise über eine Rückführleitung mit der Pumpeneinrichtung in den Abluftkreislauf zurückgeführt werden, so daß diese nicht an die Umgebung freigesetzt werden. Eine derartige Rückführung gilt sinngemäß gleichermaßen für in der Behandlungsstrecke des Gases oder des Gasgemisches, in der dieses mit dem atomaren Sauerstoff beaufschlagt wird, anfallende Kondensat.

Die Ionisierungseinrichtung wird schließlich vorteilhafterweise durch eine mit Hochspannung beaufschlagbare Ionisierungsröhre gebildet, wobei derartige Ionisierungsröhren an sich bekannt sind und in der Medizintechnik weitgehende Verwendung finden, zumal diese eine verhältnismäßig einfache Einstellung des Ionisierungsgrades der Luft ermöglichen und auch verhältnismäßig kostengünstig bereitstellbar sind. Ein wesentlicher Vorteil derartiger in Form von Ionisierungsröhren ausgebildeten Ionisierungseinrichtungen ist zudem der, daß diese nur eine verhältnismäßig geringe elektrische Leistungsaufnahme zeigen, so daß auch aus den Gleichspannungsbordanlagen beispielsweise von Kommunalfahrzeugen durch geeignete Umwandlung die für den Betrieb der Ionisierungsröhren notwendige Hochspannung erzeugt werden kann.

Die Erfindung wird nun unter Bezugnahme auf die nachfolgende einzige schematische Zeichnung anhand eines Ausführungsbeispieles im einzelnen beschrieben. Diese zeigt:
In Form eines Blockschaltbildes den Strom eines Gases oder Gasgemisches, das sich über einer Flüssigkeit in einem Behälter gebildet hat, vom Austritt aus den Behälter über die Behandlungsstrecke mit atomarem Sauerstoff bis zum Austritt aus einem Auslaß in die Umgebung.

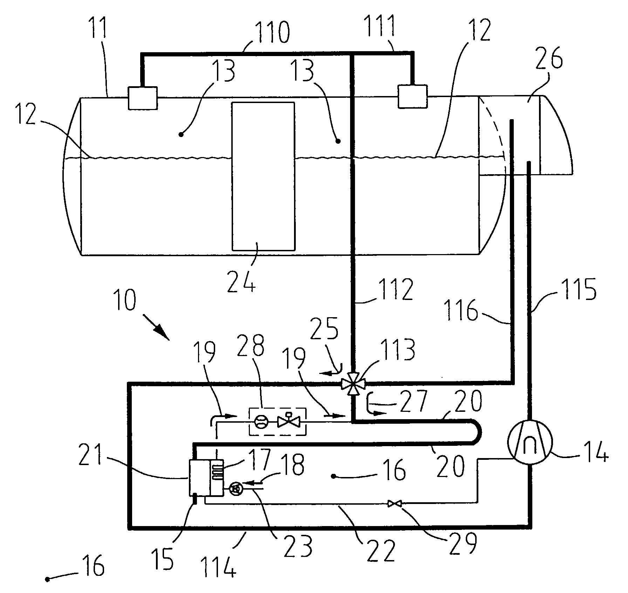

In der einzigen Figur ist eine Vorrichtung 10 zum Reinigen von über Flüssigkeiten 12 in einem Behälter 11 enstehenden Gasen oder Gasgemischen 13 dargestellt.

Behälter 11 dieser Art werden beispielsweise auf hier nicht gesondert dargestellten sogenannten Kommunalfahrzeugen aufgebaut und dienen zur Aufnahme von Flüssigkeiten wie beispielsweise Abwassergemischen aus Kanalisationen, Kläranlagen, Sammelanlagen oder sonstigen Behältern oder Orten, an denen zu entsorgende Flüssigkeit anfällt. Der Behälter 11 kann aber auch zur Aufnahme der Flüssigkeiten des gleichen Ursprunges wie vorangehend beschrieben dienen, wenn dieser an beliebiger Stelle stationär aufgebaut ist. Aus diesem Grund wird kein weitergehender Bezug auf ein Fahrzeug an dieser Stelle genommen, auf der der Behälter 11 aufgebaut ist.

Behälter 11 dieser Art weisen regelmäßig zwei Teilbehälter auf, was im vorliegenden Falle durch ein schematisch dargestelltes Trennschott 24 bewirkt wird, wobei das Trennschott 24 durch geeignete Mittel, die einzelnen Behälterteile jedoch dichtend abschließend, zur Vergrößerung bzw. Verkleinerung des einen Behälterteils bzw. des anderen Behälterteils im Behälter verschoben werden kann. Im einen Behälterteil befindet sich Flüssigkeit 12, die stärker verschmutzt ist, im anderen Behälterteil befindet sich Flüssigkeit 12, die weniger stark verschmutzt ist, wobei die weniger stark verschmutzte Flüssigkeit in einem Behälterteil als Reinigungsflüssigkeit zur Verfügung steht, um beispielsweise vor Ort, d.h. am Einsatzort beispielsweise eines Kommunalfahrzeugs, eine zusätzliche unmittelbare Reinigung der Absaugumgebung durchführen zu können. Gleichwohl entsteht über beiden Flüssigkeiten 12 in den Behälterteilen ein Gas bzw. Gasgemisch 12, das im Zuge des Befüllens des Behälters 11 mit der bestimmungsgemäß darin aufzunehmende Flüssigkeit 12 normalerweise an die Umgebung 16 abgegeben wird, was, wie eingangs erwähnt, mit sehr nachteiligen Gesundheits- und Geruchsbeeinträchtigungen und ggf. einer Umweltgefährdung verbunden ist. Darüber hinaus wird bisher das Gas und/oder Gasgemisch 13 an die Umgebung 16 unkontrolliert abgegeben.

Um diesen unkontrollierten Ausstoß des Gases und/oder Gasgemisches 13 zu verhindern, wird das über der Flüssigkeit 12 in beiden Teilen des Behälters 11 entstehende Gas und/oder Gasgemisch 13 über eine jeweilige Leitung 110, 111 einer Sammelleitung 112 zugeführt und über einen Vierwegehahn 113 in Richtung des Pfeiles 25 geleitet und von dort über eine Leitung 114 auf eine Pumpeneinrichtung 14. Von der Pumpeneinrichtung 14 wird das Gas und/oder Gasgemisch 13 über eine Leitung 115 in einen Kondensator 26 geleitet, wo auskondensierbare Bestandteile des Gases und/oder Gasgemisches 13 abgetrennt werden. Das Gas und/oder Gasgemisch 13 gelangt dann, von auskondensierten Bestandteilen befreit, über eine Leitung 116 wiederum auf einen anderen Eingang des Vierwegehahns 113 und gelangt von dort entsprechend der Richtung des Pfeiles 27 auf eine in Form einer Leitung ausgebildete Behandlungsstrecke 20 und von dort über eine nachgeschaltete Filtereinrichtung 21 über einen der Filtereinrichtung 21 nachgeschalteten Auslaß 15 an die Umgebung 16.

Die Ionisierungseinrichtung 17 der Vorrichtung 10 saugt über eine Lufteinlaß 23 Umgebungsluft, siehe Pfeil 18, ein und ionisiert unter Bildung atomaren Sauerstoffs die eingesogene bzw. die durch die Ionisierungseinrichtung 17 hindurchgeförderte Umgebungsluft 18. Von dort wird die ionisierte Luft 19, vgl. Pfeil 19, über eine Steuer- und/oder Regel- und/oder Überwachungseinrichtung 28 geleitet, in der beispielsweise die Menge der pro Zeit erzeugten ionisierten Luft 19 und/oder deren Druck einstellbar und/oder überwachbar und/oder regelbar ist. Die Einrichtung 28 kann auch mit einer hier nicht dargestellten Analyseeinrichtung verbunden sein, die selbsttätig die Gas- und/oder Gasgemischbestandteile des zu reinigenden Gases und/oder Gasgemisches 13 analysiert, wobei das Analyseergebnis auf die Einrichtung 28 gegeben eine selbständige Steuerung und/oder Regelung und/oder Überwachung der Ionisierung und/oder der nachfolgend erfolgten Beaufschlagung des Gases bzw. Gasgemisches 13 in der Behandlungsstrecke 20 bewirken kann.

In der Behandlungsstrecke 20 erfolgt die eigentliche Vermischung des Gases bzw. Gasgemisches 13 mit der ionisierten Luft, wobei die schädlichen Bestandteile des Gases bzw. Gasgemisches durch Oxidation neutralisiert oder derart umgewandelt werden, daß die infolge der Oxidation entstehenden Produkte nicht mehr geruchsbeeinträchtigend bzw. gesundheits- oder umweltgefährdend sind.

In der oben genannten Filtereinrichtung 21 anfallendes Kondensat oder Filtrat, das beispielsweise in der Behandlungsstrecke 20 anfällt, kann über eine Rückführungsleitung 22, in der ein Absperrventil 29 zusätzlich vorgesehen sein kann, auf die Pumpeneinrichtung 14 zurückgeführt werden und von dort wieder in den vorbeschriebenen Kreislauf das Gases bzw. Gasgemisches 13 zurückgeführt werden.

### Bezugszeichenliste

- 10: Vorrichtung
- 110: Leitung
- 111: Leitung
- 112: Sammelleitung
- 113: Vierwegehahn
- 114: Leitung
- 115: Leitung
- 116: Leitung
- 11: Behälter
- 12: Flüssigkeit
- 13: Gas bzw. Gasgemisch
- 14: Pumpeneinrichtung
- 15: Austritt/Auslaß
- 16: Umgebung
- 17: Ionisierungseinrichtung
- 18: Umgebungsluft
- 19: ionisierte Luft
- 20: Strecke
- 21: Filtereinrichtung
- 22: Rückführleitung
- 23: Lufteinlaß
- 24: Trennschott
- 25: Pfeil
- 26: Kondensator
- 27: Pfeil
- 28: Steuer- und/oder Regel- und/oder Überwachungseinrichtung
- 29: Absperrventil

## Patentansprüche

1. Vorrichtung zum Reinigen von über Flüssigkeiten in Behältern entstehenden Gasen oder Gasgemischen, insbesondere in Behältern von Kommunalfahrzeugen zur Aufnahme von Flüssigkeiten wie Abwassergemischen aus Kanalisationen, Kläranlagen oder Sammelanlagen, umfassend wenigstens eine Pumpeneinrichtung zur Förderung des Gases oder Gasgemisches aus dem Behälter, dadurch gekennzeichnet, daß das den Behälter (11) verlassende Gas oder Gasgemisch (13) vor dem Austritt (15) in die Umgebung (16) mittels einer Ionisierungseinrichtung (17) behandelbar ist.

2. Vorrichtung nach Anspruch 1, dadurch gekennzeichnet, daß die Umgebungsluft (18) über die Ionisierungseinrichtung (17) geleitet wird, wobei die dabei entstehende, wenigstens teilweise ionisierte Luft (19) dem den Behälter (11) verlassenden Gas oder Gasgemisch (12) zu dessen ionisierender Behandlung beigemischt wird.

3. Vorrichtung nach Anspruch 2, dadurch gekennzeichnet, daß die Behandlung des Gases oder des Gasgemisches (13) längs einer in der Länge vorbestimmbaren Strecke (20) und/oder in einer vorbestimmbaren Zeit erfolgt.

4. Vorrichtung nach einem oder mehreren der Ansprüche 2 bis 4, dadurch gekennzeichnet, daß die Menge der pro Zeit erzeugten ionisierenden Luft (19) und/oder deren Druck einstellbar und/oder überwachbar ist.

5. Vorrichtung nach einem oder mehreren der Ansprüche 2 bis 5, dadurch gekennzeichnet, daß der Auslaß (15) zum Austritt des behandelten Gases oder Gasgemisches (12) mit einer Filtereinrichtung (21) versehen ist.

6. Vorrichtung nach Anspruch 5, dadurch gekennzeichnet, daß die Filtereinrichtung (21) und/oder die Behandlungsstrecke des Gases oder Gasgemisches (13) über eine Rückführleitung (22) mit der Pumpeneinrichtung (14) verbunden sind/ist.

7. Vorrichtung nach einem oder mehreren der Ansprüche 1 bis 6, dadurch gekennzeichnet, daß die Ionisierungseinrichtung (17) durch eine mit Hochspannung beaufschlagbare Ionisierungsröhre gebildet wird.
